# EUROPEAN PATENT APPLICATION

(11) **EP 1 643 141 A1**
(43) Date of publication of application: **05.04.2006**
(21) Application number: 04023280.3
(22) Date of filing: 30.09.2004
(51) Int. Cl.: F16C 13/02, F16C 13/04, F16C 27/02, F16C 35/02, F16C 23/04

(54) **A device for supporting conveyor rollers**

(71) Applicant: Profilati S.p.A., 40059 Medicina (Bologna) (IT)
(72) Inventor: Ceccato, Sergio, 40055 Castenaso (Bologna) (IT)
(74) Representative: Fanzini, Valeriano

(57) **Abstract**

A device for supporting conveyor rollers which are supported on a special framework. The device comprises a supporting block (12) for the roller (16) pin (14), the block in turn being supported by the framework (13). The block (12) advantageously comprises elastic means (19) which act as pin supporting means.

## Description

A device for supporting conveyor rollers which are supported on a special framework.

In particular, the present invention relates to a device for supporting a conveyor roller belonging to a bench used in a system for the extrusion of bars, preferably light alloy (aluminium alloy) bars, in particular bars for the production of door and window frames and the like.

One problem experienced in this field relates to the risk, for bars exiting the extruder (at a high temperature) which are set down on the roller bench downstream of the extruder, that they may scrape to a greater extent against one or more of the rollers belonging to the roller bench which project upwards, in an unwanted manner, by more than the predetermined level maintained by the other rollers belonging to this work bench.

In this case unwanted scratches may be produced on the bar, spoiling its outer appearance, and, since the bars are used in full view for door and window frames (for example, in the doors and windows of houses), these scratches may result in the product thus obtained being completely rejected.

It has been therefore provided a device for supporting conveyor rollers which are supported on a special framework; characterised in that it comprises a supporting block for the roller pin, the supporting block being in turn supported by the framework; and characterised in that the block comprises elastic means which act as supporting means for the pin.

In this way, any risk of rollers rigidly projecting relative to the other rollers belonging to the work bench is avoided and, consequently, the risk of scratches being made on the "hot" bar exiting the extruder is limited.

Moreover, the present device also overcomes the possibility of breakage of the rollers or their supports due to the high stresses involved. The present elastic support for the rollers belonging to the roller bench allows the stress peaks discharged into the roller supporting structure to be limited, consequently limiting the above mentioned risks of breakage.

In accordance with another aspect, means are also advantageously provided for adjusting the height, which adjust the position of the roller pin seat relative to the supporting framework.

The present invention also relates to the use of the supporting device disclosed in a bench for extrusion of light aluminium alloy bars, in particular for the production of door and window frames and the like.

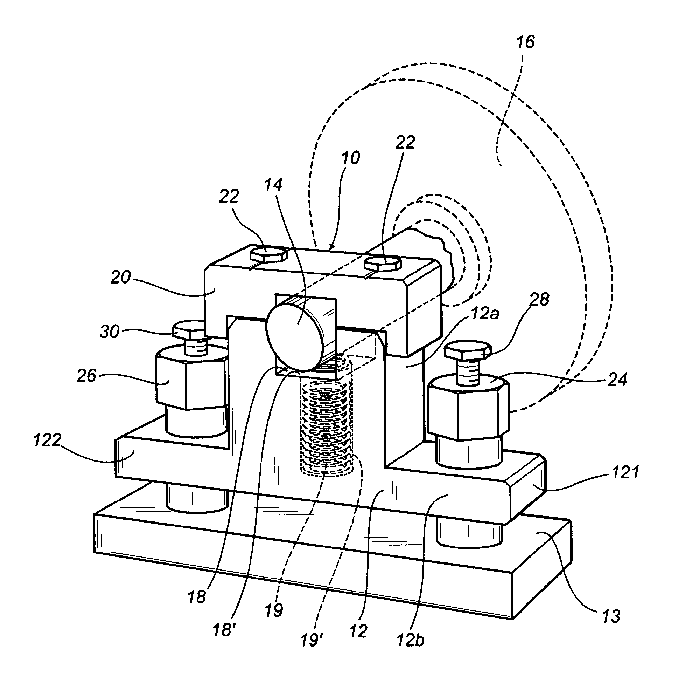

The technical features of the present invention are set out in the claims herein and the advantages more clearly illustrated in the detailed description which follows, with reference to the accompanying drawing, which illustrates a preferred embodiment of the invention without limiting the scope of the inventive concept, and which:
- the figure illustrates a perspective view of a preferred embodiment of the device for supporting rollers made according to the present invention.

The accompanying drawing illustrates a preferred embodiment 10 of the device for supporting conveyor rollers which are supported on a special frame 13, only partially shown in the accompanying drawing.

In particular, the rollers are the conveyor rollers belonging to a bench for the extrusion of aluminium light alloy bars, in particular for the production of door and window frames and the like.

Therefore, the supporting device 10 comprises a supporting block 12 for the roller 16 pin 14, the supporting block 12 being in turn supported by the framework 13 and consisting of a single part made of metal, preferably aluminium alloy with an upper central body 12a and a longitudinal base 12b.

As illustrated, the base comprises a first and a second portion, respectively labelled 121 and 122, which project longitudinally from a respective side or transversal face of the central body 12a.

The central body 12a in turn has a general "U"-shaped configuration, forming a seat 18 for a pin belonging to the roller supported.

Advantageously, the top of said seat is closed by a lid 20, with an inverted "U" shape, which is attached to the top of the central body 12a by suitable fixing means consisting of screws 22, 22, inserted vertically in a corresponding threaded hole in the central body 12a.

These holes in the supporting block for the screws which close the pin retaining lid, not illustrated in detail in the accompanying drawing, open onto the upper face of the central body.

The supporting block 12 also comprises elastic means 19, which act as supporting means for the pin and are suitable for providing the roller with support with the height automatically adjusted according to the weight it supports.

Advantageously, these elastic means take the form of a helical spring 19 which is held in the seat 18 with its longitudinal axis vertical by suitable spring retaining means, in particular consisting of a spring housing and centring cavity which extends vertically inside the bottom wall 18' of the seat. This cavity is illustrated with a dashed line in the drawing and is labelled 19'.

The spring 19 is preloaded, so that it normally forces the roller pin 14 against the lid 20.

According to another advantageous feature, there are means for adjusting the height of the roller pin seat, relative to the supporting framework, said means acting in particular to adjust the height of the supporting block 12.

These height adjusting means comprise a first and a second bolt 24, 26 which can be screwed into a corresponding threaded vertical hole made in a corresponding base longitudinal projection 121, 122. The lower end of each bolt engages with a horizontal upper surface of the supporting framework. By turning the bolts in one direction or in the opposite direction, the supporting block 12 can be raised, lowered or turned slightly.

There are also means for locking the supporting block 12 in the appropriate position, achieving the desired supporting block adjustment or position.

These locking means are mounted on the adjusting means and comprise, for each bolt, a respective screw 28, 30, inserted in a coaxial vertical through-hole in the adjusting bolt 24, 26 and with its lower end projecting from the bolt and below the bench or framework.

In this way, the screw can operate in conjunction with an opposite threaded hole, not illustrated, made in the bench, or, in a different embodiment, with an opposite nut on the opposite lower side of the supporting bench, so that, once the locking position has been found, by tightening the locking screw in the threaded hole in the bench or with the nut, the part height is completely locked, that is to say the adjusting bolts 24, 26 cannot raise the supporting block any further relative to the bench 13.

There may be a corresponding plate or washer between the nut and the lower surface of the bench. The procedure for using this device requires firstly adjustment of the height of the seat using the adjusting bolts 24 and 26. Then the axial yielding of the spring 19 is used to provide the correct support for the roller at the required height. Therefore, this gives a particularly compact and manoeuvrable supporting block.

The invention described may be subject to many modifications and variations without thereby departing from the scope of the inventive concept. Moreover, all details of the invention may be substituted with technically equivalent elements.

## Claims

1. A device for supporting conveyor rollers which are supported on a special framework, **characterised in that** it comprises a supporting block (12) for the roller (16) pin (14), the supporting block being in turn supported by the framework (13); and also **characterised in that** the block comprises elastic means (19) which act as supporting means for the pin (14).

2. The device according to claim 1, **characterised in that** the supporting block (12) consists of a single part.

3. The device according to either of the foregoing claims, **characterised in that** the supporting block (12) comprises a central body and a base.

4. The device according to claim 3, **characterised in that** the base has a first and a second portion projecting from a respective longitudinal side of the central body (12a).

5. The device according to any of the foregoing claims, **characterised in that** the central body (12a) forms a seat (18) for a pin belonging to the roller supported.

6. The device according to any of the foregoing claims, **characterised in that** the central body has a general "U" shape.

7. The device according to any of the foregoing claims, **characterised in that** the top of the seat is closed by a lid (20) attached to the top of the central body (12a).

8. The device according to claim 7, **characterised in that** there are suitable lid fixing means inserted vertically in a corresponding hole in the central body.

9. The device according to any of the foregoing claims 7 or 8, **characterised in that** there are holes for the screws which close the lid designed to hold the pin in the seat, the holes opening onto the upper face of the central body.

10. The device according to any of the foregoing claims, **characterised in that** the elastic means consist of a helical spring (19).

11. The device according to any of the foregoing claims, **characterised in that** the elastic means (19) are held in the seat (18).

12. The device according to any of the foregoing claims, **characterised in that** the elastic means are arranged with their longitudinal axis vertical.

13. The device according to any of the foregoing claims, **characterised in that** there are spring retaining and centring means extending vertically from the bottom wall of the seat.

14. The device according to any of the foregoing claims, **characterised in that** the elastic means (19) are preloaded to force the roller pin (14) against the lid (20).

15. The device according to any of the foregoing claims or according to the preamble to claim 1, **characterised in that** the block comprises means for adjusting the height of the block relative to the supporting framework.

16. The device according to any of the foregoing claims or according to the preamble to claim 1, **characterised in that** there are means for adjusting the height of the roller pin, said means adjusting the position of the roller pin seat relative to the supporting framework.

17. The device according to claim 16, **characterised in that** the means for adjusting the height of the seat are means which adjust the height of the supporting block (12).

18. The device according to any of the foregoing claims, **characterised in that** the height adjusting means comprise at least one bolt (24, 26) which can be screwed into a corresponding threaded vertical hole made in a corresponding base longitudinal projection (121, 122).

19. The device according to any of the foregoing claims, **characterised in that** there is a first and a second bolt (24, 26) which can be screwed into a corresponding threaded vertical hole made in a corresponding base longitudinal projection (121, 122), the end face of each bolt engaging with a corresponding horizontal surface of the supporting framework.

20. The device according to any of the foregoing claims, **characterised in that** there are means for locking the supporting block (12) at the required height.

21. The device according to any of the foregoing claims, **characterised in that** the locking means are mounted on the adjusting means.

22. The device according to any of the foregoing claims, **characterised in that** the locking means comprise, for each bolt, a respective screw (28, 30), inserted in a coaxial vertical through-hole made in the corresponding adjusting bolt (24, 26), and, to lock the supporting block (12) at the required height, designed to be secured to the supporting bench (13) below.

23. Use of a device according to any of the foregoing claims in a bench for the extrusion of light aluminium alloy bars, in particular for the production of door and window frames and the like.
